# EUROPEAN PATENT SPECIFICATION

(11) **EP 3 031 667 B1**
(45) Date of publication and mention of the grant of the patent: **30.05.2018**
(21) Application number: 14834607.5
(22) Date of filing: 06.08.2014
(51) Int. Cl.: B60P 3/025

(54) **BUS ADAPTED FOR THE PERFORMANCE OF PLAYS EN ROUTE**
AN DIE LEISTUNG VON UNTERWEGS GESPIELTEN SPIELEN ANGEPASSTER BUS
AUTOBUS ADAPTÉ POUR LA REPRÉSENTATION DE PIÈCES DE THÉÂTRE EN COURS DE ROUTE

(30) Priority: 07.08.2013 ES 201300751
(43) Date of publication of application: 15.06.2016
(73) Proprietor: ARRIVA SPAIN HOLDING, S.L.U., 28022 Madrid (ES)
(72) Inventor: FUENTES RAMIREZ, Javier, 28060 MADRID (ES)
(74) Representative: Urizar Anasagasti, Jesus Maria
(86) International application number: PCT/ES2014/000134
(87) International publication number: WO 2015/018955

(56) References cited:
- EP-A2- 0 933 287
- EP-A2- 0 933 287
- WO-A1-03/055718
- CN-U- 2 034 559
- GB-A- 190 509 397
- US-A- 4 964 671
- US-A1- 2008 259 225
- US-A1- 2010 201 146
- US-A1- 2011 169 293
- 'Teatro Bus.' 20 September 2012, XP055318881 Retrieved from the Internet: <URL:https://web.archive.org/web/2012092022 1006/http://www.teatrobus.com/el-teatro-bus >
- 'Teatro Bus.' 30 June 2013, XP054976925 Retrieved from the Internet: <URL:https://web.archive.org/web/2013063000 4742/ http://todosobremadrid.com/sites/default/fi les/vr360/ teatro_bus_nodol/teatro_bus_nodol.html>

## Description

### OBJECT OF THE INVENTION

The invention relates to the adaptation of a conventional bus to represent theatrical plays on the road, through the modification of some of the constituent elements of the cabin of said bus and the incorporation of new elements, in order to achieve a theater inside a bus. This is intended to make the journeys in the bus more pleasant by livening up the trips with theatrical performances aboard. It solves several problems that typically arise when traveling by bus, such as the tediousness of the journey for the traveler while being driven to his destination (tourist attraction, railway station...) or the time lost, until now, through theatrical animations of undoubted historical or cultural value, or just entertaining. EP 0 933 287 A2 discloses a bus with entertainment facilities. By transforming elements typical of a bus and adapting others, as described below, it is intended to make the viewer feel like being in a theater, but, innovatively, on wheels.

For the development of the present invention, some innovations have been introduced which represent a step forward in the world of the tourism industry, making it more attractive and versatile.

### BACKGROUND OF THE INVENTION

There is no evidence that there are currently buses transformed into theaters with the technical features of the present invention. The novel features of this invention are not found in the prior art, although as related background, the following are cited:
ES 1062032 U relates to a moving stage of the type intended to be fixed on the foundation trench of theaters, comprising a large upper platform, consisting of a stiffening structure and cover plates forming the work surface, support structures of the upper platform, consisting of a lower bed on which are mounted, in substantially vertical planes, pairs of beams, articulated by their intermediate portion by pivot axes and forming respective scissor mechanisms of variable height, drive means for raising and lowering the upper platform, consisting of hydraulic cylinders associated with the respective support structures and the upper platform, security ratchets associated with drive means responsible for arranging the ratchets in a working position, by which they allow retention of the upper platform at different heights, or in an inoperative position in which they allow the raising or lowering of the upper platform and a control panel for operation of the mobile platform. Here, it is the stage which turns, not the vehicle itself that forms the theater, as in the invention proposed.

ES 132271 describes a pavilion for public traveling shows, consisting of a frame of metal structures forming a square base that allows for setting up inside and at a certain height a kind of balcony and exhibition-show portion in its center, with the entrance on the outer side in two directions. The roof is formed of parallel lines of a metal structure in its central part forming two sides in an angle and both ends by a series of arched lines in the form of a rainbow, some of them in combination with the general body forming a cantilever which surrounds the whole structure, the same being covered with canvas pieces or a suitable material for an overlay. This is an ambulatory theater very different from the theater on wheels of the present invention.

ES 2 246 890 T3 relates to a kit of parts for constructing any one of a plurality of frames of building structures for supporting a cover of sheet material, each frame comprising a main structure having a generally rectangular floor plan and consisting of a plurality of generally parallel arches which extend at right angles to an axis of symmetry of the floor plan, wherein each arch is constituted by a plurality of interconnected generally straight beams, each pair of adjacent beams being inclined one relative to the other, and wherein the kit of parts includes a plurality of identical support beams, a plurality of identical main girders, and a plurality of secondary beams, each of the secondary beams having one of various predetermined lengths, the kit of parts being such that each arch of all frames includes at least one pair of support beams for supporting that arch on a horizontal surface, and at least four main girders, and such that the arches of the at least one frame further include two secondary beams, each of which is positioned between a respective pair of main girders, through which frames of building structures having rectangular floor plans of different areas can be constructed by selecting appropriate components of the kit of parts.

As is clear from the research conducted, none of the documents found are similar compared to the invention.

### DESCRIPTION OF THE INVENTION

The bus adapted for the representation of theatrical plays on the road, as the object of the present invention, is achieved through the following transformations and adaptations:
- The passenger area of the cabin of the bus is divided into two distinct halves by the orientation of the seats, the rear seats facing forward in the direction of travel and the seats of the front half facing toward the back in the opposite direction of travel, a space for a stage being configured in the middle so that it is visible by all passengers, this being a novel configuration of the bus seats that differ from their conventional orientation which is to all be looking forward and in the direction of travel. This innovation has the added advantage of providing greater security to transport in that the passengers facing rearward are provided with a support cushioning for the sudden tilting of the body and head in the event of sudden braking or head-on collision, the front of the bus being most prone to this type of risk. Studies have shown that "rear-facing while traveling by car is safer for children."
- Safety barriers are installed with padded horizontal supports in front of the first row of the new north gallery of seats facing the center stage due to the change of orientation of these seats, which prevent the front rows of seats from being exposed without protection from an unforeseen event in the traffic, such as a sudden burst of speed, an accident or a rear-end collision. With this barrier provided with security support having a anteroposterior effect unknown in a conventional bus, where such barriers have a posteroanterior effect, is achieved, on the one hand, the physical separation between the spectator or traveler in the first row of the new north gallery of seats with respect to the center stage and, on the other hand, the security protection as already described. This new security support barrier is installed on both the left side of the front row of seats facing the stage and the right side, with respect to the central aisle of the bus. This security barrier has a triple purpose, because not only does it solve security issues by preventing passengers from the first two new rows to invade the center stage in case of an accident, but it also solves what differentiation herein serves as a center stage, also enabling compliance with regulatory requirements for the transport of passengers and school children, which requires that no seat opposite an aisle or space be without protection in case of a possible accident, an unexpected event or a collision.
- A dressing room for actors is mounted in the front of the bus on the right side of the driver, consisting of an aluminum cab fixed by means of attachment to the cabin floor and separated by a curtain that allows the costume changes for the actors. This dressing room is located so it does not bother the driver in his normal driving or prevent his panoramic view. In addition, this dressing room serves to separate the cabin of the bus now reserved for the theatrical action of the exclusive driving space, without compromising the necessary driving security by the driver of the vehicle.
- Specific audiovisual equipment needed for the offered service, which are not usually found in a conventional bus, are installed on the bus, in addition to incorporating audiovisual means, such as video displays oriented to be seen from the rear and front seats, having incorporated other, more typical equipment of the performing arts than conventional transportation means, such as:
   a. A small mixer allows transmission of multiple channels equipped with different microphones while projecting videos at the same time or broadcasting ambient or background music as required of each script in question.
   b. Unlike some tourist coaches, in which a wired microphone is common for use by the tour guide, in the present invention the bus is provided with a wireless microphone network of several microphones at the same time for use by the different actors involved in each play in question.
   c. A public address system or wireless speakers allows relaying all the necessary sounds in the staging of each play, such as the voices of the actors, the soundtrack and videos of the script.
   d. A webcam allows live recording of the play or the stage show for later viewing.
- A system similar to theater curtains gives the theater bus object of the present invention the interior closures on doors similar to existing ones in a conventional theater. These curtains not only satisfy an artistic necessity, but are also adapted to transport legislation on safety, being made of fire retardant velvet fabric, which prevents any contingency or risk of fire on board the bus.

In addition to the innovations outlined above, there are some original transformations that make the present invention a novel object in the state of the art, these changes being the following:
- The seats currently installed on this type of conventional buses have been replaced by others especially designed and created. The original standard bus seats have become similar to those in conventional theaters seats, trying as far as possible to achieve the greatest similarity possible without neglecting safety conditions, having been chosen for this type red flame retardant velvet fabric.
- Conventional bus curtains have become shades similar to ones found in conventional theaters, trying as far as possible to get the highest similarity. Apart from this transformation, the design of the curtains has been studied in order to achieve the objective sought that is to give the curtains trim or decorative scrolls, thus achieving the intended effect of the curtains belonging to the theatre world, and not curtains usually found in the sector of passenger transport by road. This transformation brings to the state of the art a new original configuration of the bus unprecedented to date.
- A velvet carpet, not customary in conventional buses, while it is unusual to place fabric on the floor of the body that is usually bare, especially in intercity type buses. Occasionally, floors of the bodies are adorned with decorative carpets, not comprehensively, in order to offer travelers a greater sense of comfort. Similarly, as explained with the seats and curtains, carpets normally installed on the ground or floor of the body in such conventional buses have been replaced by some of special design. The original carpet that are occasionally installed in some tour buses (not intercity buses) have become similar to those carpets in conventional theaters, trying as far as possible to get the highest possible similarity. Thus, carpets that are exceptionally located on the floors of some means of transport such as those mentioned, have become carpets belonging to the world of theater. To achieve such imitation, a very creative design of a concrete and specific type of carpet (unprecedented in the field of passenger transport) was achieved by choosing a model that mimics the usual carpet used in the theater, choosing to do a type of imitative velvet fabric, reddish as in theaters, that allows identifying the carpet with the noble art of theater (helping to strengthen the idea of theater on the bus itself). As in previous cases, the carpet material chosen has been carefully chosen in order not only to achieve the aesthetic goal of assimilating it to the theater, but also to meet all the requirements of current legislation safety in the transport of passengers, especially schoolchildren, which requires a completely non-slip floor, and fireproof of course, to avoid any potential risk of fire on board the bus.

In addition to the new and original transformations that were disclosed, some original adaptations of existing elements are described below, which are also a part of the invention for its visual impact. Bus ceilings are completely adapted by using decorations specific to the theater world. Coffered ceilings specific to the theater scene are installed in the central part, with images of lamps standard on a theater stage and others decorations found on the ceilings of conventional theater. Images symbolizing the usual reserved theater boxes are placed on the sides. Also, a comprehensive design of all sidewalls of the vehicle is applied, using wooden images, images of symbols proper to the theater, and security screens or any other element of the vehicle are installed on all partial walls, also using pictures belonging to the theatrical world and not the world of transport. Obviously, all this special work and creativity could be understood as a decoration, but there is no precedent in the transport sector, thus considering an additional contribution to the state of the art in the field of road transport, although obviously of a lower level than previous innovations and transformations.

### BRIEF DESCRIPTION OF THE DRAWINGS

Drawings provided by way of non-limiting example for a better understanding of this specification which describe a preferred embodiment of the invention are attached:

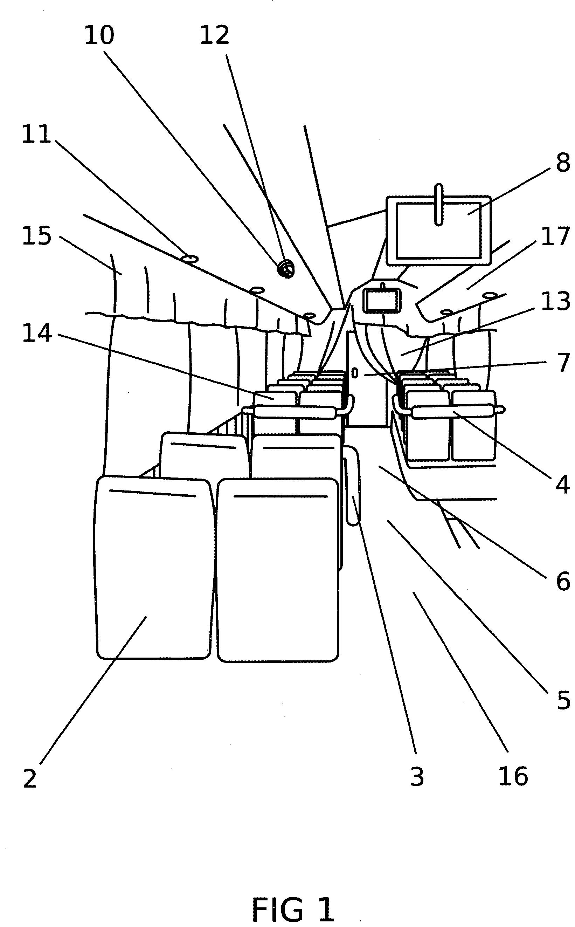

Figure 1. - Conventional perspective view of the interior of the theater bus with the facing seats and safety barriers delimiting the central stage space, as well as video screens oriented in both directions.

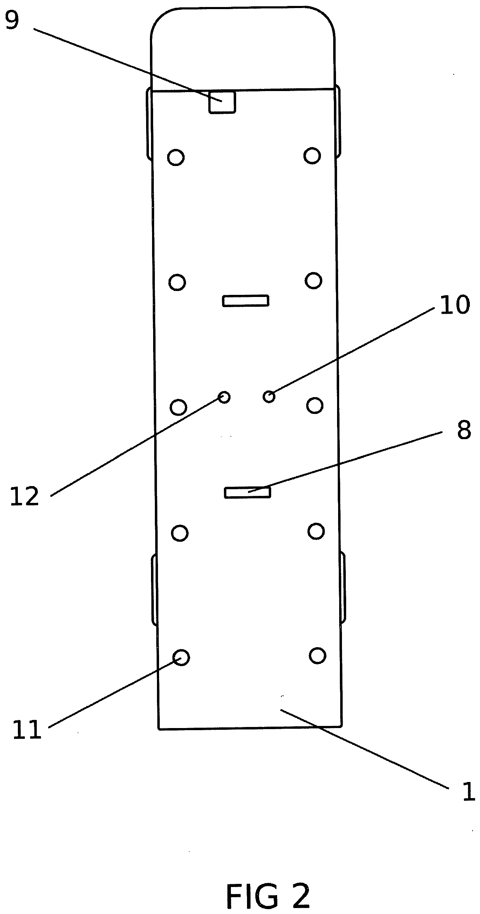

Figure 2. - Scheme of audiovisual media such as mixer, wireless microphone equipment, wireless speakers and webcam.

The following numerical references of the elements are shown in these figures:
1) Bus
2) Facing seats
3) Safety barriers delimiting the stage
4) Horizontal padded supports of the safety barriers
5) Stage
6) Central aisles
7) Dressing room
8) Video screens oriented towards the front and rear seats
9) Mixer
10) Wireless microphones
11) Wireless speakers
12) Webcam
13) Red velvet theater curtain
14) Theater style upholstered seats
15) Trim or scrolls on curtains
16) Non-slip velvet carpet
17) Decorated vinyl

### DESCRIPTION OF A PREFERRED EMBODIMENT

A preferred embodiment of the proposed invention is constituted from the following transformations and adaptations in the cabin of a bus (1):
- Division of the passenger area from the cabin of the bus into two distinct halves differentiated by the orientation of the seats (2), the seats of the rear half facing forward in the direction of travel and the seats of the front half facing in the opposite direction of travel, the center being configured as a stage visible to all passengers.
- Installation of safety barriers (3) with padded horizontal supports (4) in front of the first row of the new north-facing gallery of seats (2) facing the central stage as a result of the change in the orientation of said seats. Said support security barrier (3) is installed both on the left side of the first row of seats (2) facing the stage (5) and on the right side with respect to the center aisles (6) of the bus.
- A dressing room (7) for actors is mounted in the front part of the bus on the right side of the driver, consisting of an aluminum cabin fixed by attachment means to the cabin floor and separated by a curtain which serves for costume change of the actors, positioned so that it does not prevent the panoramic view of the driver.
- At least two video screens (8) are installed in the central bus cabin where the stage (5) is located, oriented to be viewed from the rear as well as the front facing seats (2).
- A mixer (9) for transmitting multiple channels equipped with different microphones, both for the projection of videos and for the broadcast of ambient or background music.
- A set of wireless microphones comprising several wireless microphones (10) for use at the same time by different actors.
- A public address system consisting of at least two wireless speakers (11) for relaying all the necessary sounds in the staging of each play, such as the voices of the actors, the soundtrack and videos of the script.
- A webcam (12) for live recording of the play or the stage show for later viewing.
- A curtain system (13) comprising at least two curtains similar to those in a theater which give the bus cabin object of the present invention interior closures on doors similar to those existing in a conventional theater, made of a fire retardant velvet fabric.
- Upholstery (14) of facing seats (2) covered with fire retardant reddish velvet fabric.
- Trim or scrolls (15) on the curtains.
- Anti-slip velvet carpet (16) that covers the floor of the cabin.
- Adaptation of the ceiling of the bus, installing coffered ceilings with decorated vinyl (17) in the central part that mimic a theatrical stage, images of standard lamps on the stage and other decorations usually found on the ceilings of conventional theaters.

## Claims

1. Bus adapted for the representation of plays on the road, consisting of a series of transformations and adaptations in the cabin of a bus (1) to stage theatrical plays in this cabin, **characterized in that** it comprises the following changes and adaptations:
- Division of the passenger area from the cabin of the bus into two distinct halves differentiated by the orientation of the seats (2), the seats of the rear half facing forward in the direction of travel and the seats of the front half facing in the opposite direction of travel, the center being configured as a stage visible to all passengers.
- Installation of safety barriers (3) with padded horizontal supports (4) in front of the first row of the new north-facing gallery of seats (2) facing the central stage as a result of the change in the orientation of said seats, wherein said support security barrier (3) is installed both on the left side of the first row of seats (2) facing the stage (5) and on the right side with respect to the center aisles (6) of the bus.
- A dressing room (7) for actors is mounted in the front part of the bus on the right side of the driver, consisting of an aluminum cabin fixed by attachment means to the cabin floor and separated by a curtain which serves for costume changes for the actors, positioned so that it does not prevent the panoramic view of the driver.
- At least two video screens (8) are installed in the central bus cabin where the stage (5) is located, oriented to be viewed from the rear as well as the front facing seats (2).
- A mixer (9) for transmitting multiple channels equipped with different microphones, both for the projection of videos and for the broadcast of ambient or background music.
- A set of wireless microphones comprising several wireless microphones (10) for use at the same time by different actors.
- A public address system consisting of at least two wireless speakers (11) for relaying all the necessary sounds in the staging of each play, such as the voices of the actors, the soundtrack and videos of the script.
- A webcam (12) for live recording of the play or the stage show for later viewing.
- A curtain system (13) comprising at least two curtains similar to those in a theater, which give the bus cabin object of the present invention interior closures on doors similar to those existing in a conventional theater, made of a fire retardant velvet fabric.
- Upholstery (14) of facing seats (2) covered with fire retardant reddish velvet fabric.
- Trim or scrolls (15) on the curtains.
- Anti-slip velvet carpet (16) that covers the floor of the cabin.
- Adaptation of the ceiling of the bus, installing coffered ceilings with decorated vinyl (17) in the central part that mimic a theatrical stage, images of standard lamps on the stage and other decorations usually found on the ceilings of conventional theaters.

## Patentansprüche

1. An die Leistung von unterwegs gespielten Spielen angepasster Bus, umfassend eine Reihe von Umgestaltungen und Anpassungen in der Kabine eines Busses (1), um Theaterspiele in dieser Kabine zu inszenieren, **dadurch gekennzeichnet, dass** er die folgenden Änderungen und Anpassungen umfasst:
- Unterteilung des Passagierbereichs von der Buskabine in zwei unterschiedliche Hälften, die sich durch die Ausrichtung der Sitze (2) unterscheiden, wobei die Sitze der hinteren Hälfte nach vorne in Fahrtrichtung zeigen und die Sitze der vorderen Hälfte gegen die Fahrtrichtung zeigen, wobei das Zentrum als Bühne, die allen Passagieren sichtbar ist, gestaltet ist.
- Montage von Sicherheitsbarrieren (3) mit gepolsterten Horizontalträgern (4) vor der ersten Reihe der neuen Nordtribüne von Sitzen (2), die durch die Änderung der Ausrichtung der Sitze in Richtung der Bühne zeigen, wobei die Sicherheitsträgerbarriere (3) sowohl auf der linken Seite der ersten Reihe von Sitzen (2), die in Richtung der Bühne (5) zeigen, als auch auf der rechten Seite bezüglich der Mittelgänge (6) des Busses montiert ist.
- einen Ankleideraum (7) für die Akteure, der in dem vorderen Teil des Busses auf der rechten Seite des Fahrers montiert ist, bestehend aus einer Aluminiumkabine, die durch Befestigungsmittel an dem Kabinenboden befestigt und durch einen Vorhang abgetrennt ist, der für Kostümwechsel der Schauspieler dient, so positioniert, dass er nicht die Sicht des Fahrers behindert.
- mindestens zwei Bildschirme (8), die in der zentralen Buskabine montiert sind, wo sich die Bühne (5) befindet, ausgerichtet, um von sowohl von den nach hinten als auch den nach vorne zeigenden Sitzen (2) gesehen zu werden.
- ein Mischpult (9) zur Übertragung mehrerer Kanäle, das mit verschiedenen Mikrofonen für sowohl die Projektion von Videos als auch für die Übertragung von Begleit- und Hintergrundmusik ausgestattet ist.
- einen Satz Drahtlosmikrofone mit mehreren Drahtlosmikrofonen (10) zur gleichzeitigen Verwendung durch verschiedene Akteure.
- eine Lautsprecheranlage, bestehend aus mindestens zwei Drahtloslautsprechern (11) zur Weiterleitung aller erforderlichen Töne in der Inszenierung jedes Spiels, wie den Stimmen der Schauspieler, den Soundtrack und Videos des Skripts.
- eine Webcam (12) zur Live-Aufnahme des Spiels oder der Bühnenshow für spätere Ansicht.
- ein Vorhangsystem (13), bestehend aus mindestens zwei Vorhängen, ähnlich denen in einem Theater, das die Buskabine, Gegenstand der vorliegenden Erfindung, mit inneren Verschlüssen an Türen, ähnlich denen in einem herkömmlichen Theater, ausstattet, wobei die Vorhänge aus einem feuerhemmende Samtstoff hergestellt sind.
- Polsterung (14) von zugewandten Sitzen (2), die mit feuerhemmendem rötlichem Samtstoff bedeckt ist.
- Zierleisten oder Lambrequins (15) auf den Vorhängen.
- rutschhemmenden Samtteppich (16), der den Boden der Kabine bedeckt.
- Anpassung der Decke des Busses durch Montage von Kassettendecken mit dekoriertem Vinyl (17) im zentralen Teil, der eine Theaterbühne imitiert, Bildern von Standard-Lampen auf der Bühne und anderer Dekoration, die in der Regel an den Decken herkömmlicher Theater zu finden ist.

## Revendications

1. Bus adapté pour la représentation de pièces sur la route, consistant en un ensemble de transformations et d'adaptations dans la cabine d'un bus (1) pour monter des pièces de théâtre dans cette cabine, **caractérisé en ce qu'**il comprend les changements et les adaptations suivants :
- Division de la zone des passagers de la cabine du bus en deux moitiés distinctes distinguées par l'orientation des sièges (2), les sièges de la moitié arrière regardant vers l'avant dans le sens de la marche et les sièges de la moitié avant regardant dans le sens opposé de la marche, le centre étant configuré comme une scène visible pour tous les passagers.
- Installation de barrières de sécurité (3) avec des supports horizontaux rembourrés (4) en face de la première rangée de la nouvelle galerie de sièges (2) regardant vers le nord en regard de la scène centrale étant le résultat du changement dans l'orientation desdits sièges, dans lequel ladite barrière de sécurité de support (3) est installée aussi bien sur le côté gauche de la première rangée de sièges (2) en regard de la scène (5) que sur le côté droit par rapport aux couloirs du centre (6) du bus.
- Un vestiaire (7) pour les acteurs est monté sur la partie avant du bus sur le côté droit du conducteur, consistant en une cabine en aluminium fixée par des moyens de liaison au sol de la cabine et séparée par un rideau qui sert de changements de costume pour les acteurs, positionnée pour empêcher la vue panoramique du conducteur.
- Au moins deux écrans vidéo (8) sont installés dans le bus central où la scène (5) est située, orientée pour être vue depuis la partie arrière ainsi que les sièges regardant vers l'avant (2).
- Un mixeur (9) pour transmettre de multiples canaux équipés de différents microphones, aussi bien pour la projection de vidéos que pour la diffusion de musique ambiante ou de fond.
- Un ensemble de microphones sans fil comprenant plusieurs microphones sans fil (10) pour leur utilisation simultanée par différents acteurs.
- Système de sonorisation consistant en au moins deux haut-parleurs sans fil (11) pour relayer tous les sons nécessaires dans le montage de chaque pièce, tels que les voix des acteurs, les titres et les vidéos du script.
- Une webcam (12) pour l'enregistrement en direct de la pièce ou du spectacle sur scène pour une vision ultérieure.
- Un système de rideau (13) comprenant au moins deux rideaux similaires à ceux dans un théâtre, ce qui donne à la cabine du bus objet de la présente invention des fermetures intérieures sur des portes similaires à celles existant dans un théâtre traditionnel, consistant en un tissu en velours ignifuge.
- Rembourrage (14) de sièges en regard (2) revêtus de tissu en velours rougeâtre ignifuge.
- Ornement ou volutes (15) sur les rideaux.
- Tapis en velours antidérapant (16) qui revête le sol de la cabine.
- Adaptation du plafond du bus, installant des plafonds à caisson avec du vinyle décoré (17) dans la partie centrale qui imite une scène de théâtre, des images de lampes standard sur la scène et autres décorations souvent présentes sur les plafonds de théâtres traditionnelles.
